# EUROPEAN PATENT APPLICATION

(11) **EP 2 613 207 A2**
(43) Date of publication of application: **10.07.2013**
(21) Application number: 12191141.6
(22) Date of filing: 02.11.2012
(51) Int. Cl.: G05B 13/04

(54) **Adaptive trend-change detection and function fitting system and method**

(30) Priority: 04.01.2012 US 201213343548
(71) Applicant: Honeywell International Inc., Morristown, NJ 07962-2245 (US)
(72) Inventor: Patankar, Ravindra, Morristown, NJ 07962-2245 (US); Ramezani, Vahid, Morristown, NJ 07962-2245 (US)
(74) Representative: Houghton, Mark Phillip

(57) **Abstract**

Methods and apparatus are provided for adaptively detecting trend changes in data. An initial set of data points is collected and a curve fit thereof is computed. A set of new data points is collected, and whether or not a trend change has occurred is detected. If a trend change has not occurred, the set of new data points is made part of the initial set of data points, and the steps of computing a curve fit, collecting new data points, and detecting whether or not a trend change has occurred are repeated. If, however, a trend change has occurred, a determination is made as to where the trend change was initiated, a curve fit for all data collected from where the detected trend change was initiated is computed, and the steps of collecting new data points and detecting whether or not a trend change has occurred are repeated.

## Description

### STATEMENT REGARDING FEDERALLY SPONSORED RESEARCH OR DEVELOPMENT

This invention was made with Government support under W56HZV-05-C-0724 awarded by the United States Army. The Government has certain rights in this invention.

### TECHNICAL FIELD

The present invention generally relates to prognostic extrapolations, and more particularly relates to adaptively detecting trend-changes in data and the function fitting of the data for various purposes, such as prognostic data extrapolation.

### BACKGROUND

Modem electronic and mechanical systems, such as aircraft or other vehicle systems, are becoming increasingly complex. Health management systems are often used to monitor various health characteristics of vehicle systems. Several factors contribute to the evolution of the health states. These factors include damage accumulation, interaction between components in the system, deviation from design characteristics, and the influence of continuous or discrete events. These aspects can be modeled and evaluated using prognostic monitors, which are configured to predict faults in the vehicle system. However, the complexities of modem electronic and mechanical systems have led to increasing needs for more sophisticated health systems.

Various prognostic monitors have been developed to generate predictions of the probability of a fault occurring in a predetermined number of days (e.g., M-number of days). In some instances, however, it may be desirable to extrapolate the generated predictions further in the future (e.g., from M-number of days to N-number of days). Moreover, in some instances, such as when the prognostic monitor is provided to an end-user from a manufacturer, nothing may be known about the underlying physical process for which the prognostic monitor is available. As a specific example, an aircraft engine manufacturer may provide an engine and an engine prognostic monitor to a customer, and the customer may know very little, if anything, regarding the configuration and design of the engine prognostic monitor.

Hence, there is a need to be able to extrapolate prognostic predictions supplied from prognostic monitors further in the future, with no *a priori* knowledge of the prognostic system that provides the predictions. The present invention facilitates this need.

### BRIEF SUMMARY

In one embodiment, and by way of example only, a method for adaptively detecting trend changes in data includes collecting an initial set of data points and computing a curve fit for the initial set of data points. A set of new data points is collected, and detection is made as to whether or not a trend change has occurred by processing at least a subset of the set of new data points to determine if at least the subset of new data points differ from the computed curve fit by a predetermined metric. If a trend change has not occurred, the set of new data points is made part of the initial set of data points, and the steps of computing a curve fit, collecting new data points, and detecting whether or not a trend change has occurred are repeated. If, however, a trend change has occurred, a determination is made as to where the trend change was initiated, a curve fit for all data collected from where the detected trend change was initiated is computed, and the steps of collecting new data points, and detecting whether or not a trend change has occurred are repeated.

In another embodiment a system for adaptively detecting trend changes in data includes a data source and a processor. The data source is configured to supply data points. The processor is in operable communication with the data source and is configured to: a) collect an initial set of data points from the data source, b) compute a curve fit for the initial set of data points, c) collect new data points from the data source, and d) determine if a trend change has occurred by processing at least a portion of the new data points to determine if the new data points differ from the computed curve fit by a predetermined metric. If a trend change has not occurred, the processor is further configured to make the new data points part of the initial set of data points, and repeat b)-d). If, however, a trend change has occurred, the processor is further configured to determine where the trend change was initiated, compute a curve fit for all data collected from where the trend change was initiated, and repeat c) and d).

Furthermore, other desirable features and characteristics of the system and method disclosed herein will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and

FIG. 1 depicts a functional block diagram of an exemplary embodiment of an adaptive trend-change detection and function fitting system;

FIG. 2 depicts a process, in flowchart form, that may be implemented by the system of FIG. 1;

FIG. 3 depicts, in flowchart form, an embodiment of a particular manner in which the process depicted in FIG. 2 may be implemented;

FIG. 4 graphically depicts, for one particular implementation, all data points retrieved by the processor of FIG. 1 while implementing the process depicted in FIG. 2 or 3;

FIGS. 5-9 graphically depict sigmoidal function fits of the data points illustrated in FIG. 4 that are retrieved and processed at various instants in time during the process of FIG. 2; and

FIG. 10 depicts sigmoidal function fits of available 7-day failure probability prediction data at various instants in times together with 7-day failure probability prediction data.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

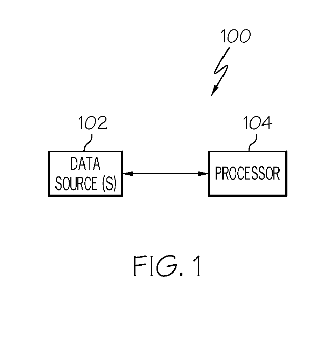

Referring first to FIG. 1, a functional block diagram of an exemplary embodiment of an adaptive trend-change detection and function fitting system is depicted and includes one or more data sources 102 and a processor 104. The one or more data sources 102 may be implemented using any one of numerous sources of data, including, but not limited to, any one of numerous types of sensors, any one of numerous data storage devices, and/or any one of numerous other systems. For example, the one or more data sources 102 may be implemented using any one or more of various types of sensors that are configured to sense physical phenomenon. If implemented using one or more data storage devices, the data sources 102 may be any one of numerous known static or dynamic memory devices, and may be configured as a database. If implemented as a system, the data sources 102 may be, for example, a prognostic health management system. No matter the specific configuration and implementation of the one or more data sources 102, each is in operable communication with, and is configured to supply data points to, the processor 104.

The processor 104 is coupled to the data sources 102 and is configured to selectively receive or retrieve data points therefrom. The processor 104 is additionally configured to implement a process to extrapolate at least a portion of the retrieved data points without relying on any knowledge about the system or component with which the data points are associated. To do so, the process implemented in the processor 104 fits a function to at least a portion of the received data points. It is known that any bell shaped probability density function, when integrated, can be approximated by a sigmoidal curve. Thus, in a preferred embodiment, the process fits a sigmoidal curve to the data points. It will be appreciated, however, that other function fits could be implemented.

The main challenge in implementing the above-mentioned extrapolation is that there could be sudden changes in the retrieved data due, for example, to sudden changes in underlying physical processes about which the system 100 designer may have no knowledge. In order to accurately extrapolate the newly trending data points, a new curve fit is needed, and the data points associated with the old trend are ignored. As will become apparent, the size of the window of data to use during this process can be important. If the window size is too small then one could interpret noisy data as having several trend changes, whereas if the window size is too large the process may be too slow to detect authentic trend changes. The process that is implemented in the processor 104 adaptively detects trend changes in the available data points by adaptively and automatically sizing the window of available data. More specifically, and as will now be described, the process includes two competing algorithms so ensure that the window of available data points is not too sensitive to potentially noisy incoming data, nor too insensitive to detect real trend changes. One of the competing algorithms will selectively increase the minimum required window size, and the other algorithm will selectively reduce the minimum required window size depending on the data being processed, thus, adaptively influencing the window used for curve fitting..

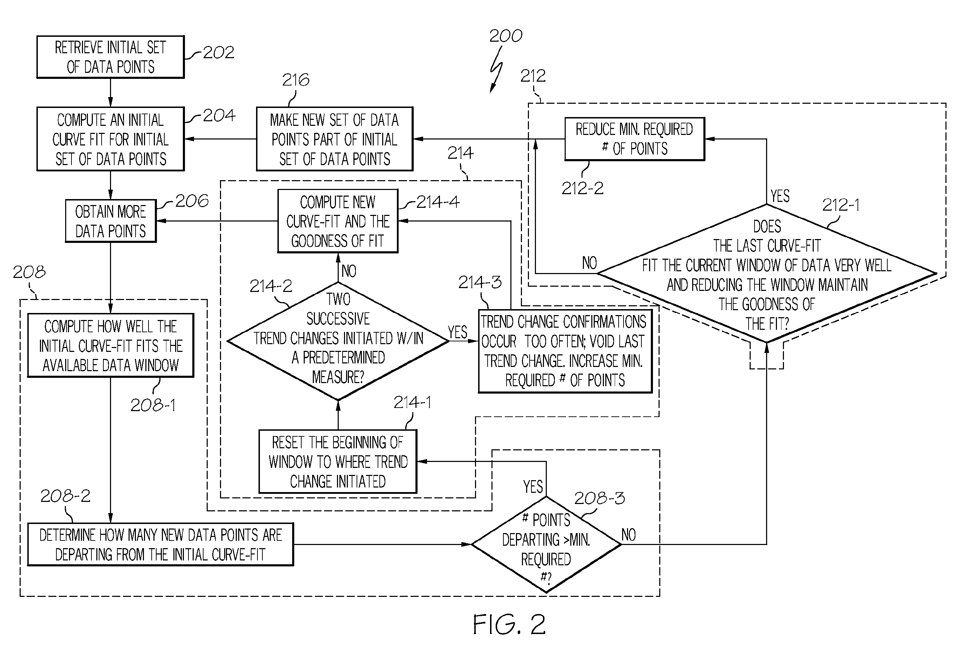

Turning to FIG. 2, an embodiment of the overall process 200 that was described above is depicted in flowchart form and will now be described. The process 200 begins by retrieving an initial set of data points 202 from the one or more data sources 102, and thereafter computing a curve fit for the initial set of data points 204. It will be appreciated that the number of data points that are initially retrieved may vary, and may be a preset number of data points or any number of data points retrieved during a preset time period. As noted above, the data points may be fit to any one of numerous functions. In the preferred embodiment, however, the function is a sigmoidal function.

No matter the manner in which the initial number of data points is retrieved, after the initial curve fit is computed 204, a set of new data points are retrieved 206 from the one or more data sources 102. The size of the set of new data points may vary, and is based on a predetermined measure, such as a predetermined length of time or a predetermined number. If the predetermined measure is a predetermined length of time, the size of the set of new data points will be the number of new data points that the processor 104 retrieves in the predetermined length of time. If the predetermined measure is a predetermined number, the size of the set of new data points will be the predetermined number of data points. In either case, the number of data points in the set of new data points will be greater than, what is referred to below, as a minimum number of departing points that are required to declare a trend change.

After the new set of data points is retrieved, the processor 104 detects whether a trend change has occurred 208. To do so, the processor 104 processes at least a subset of the set of new data points to determine if at least this subset differs from the previously computed curve fit by a predetermined metric. More specifically, and as FIG. 2 further depicts, the processor computes how well the initial curve fit fits the new data points (or at least a subset of the new data points) 208-1. The trend change is detected by a metric that measures if and how the latest set of data points are departing from the initial curve fit that was made with the intial set of data points. If this metric exceeds a threshold, refered to here as the required minimum number of departing points to declare a trend change, then a trend change is detected. Although various methods and metrics may be used for this computation, in a particular embodiment the processor 104 computes the run length ratio. As is generally known, run length ratio takes on values in the range of -0.5 to +0.5. A value near zero will indicate that the new data points are a good fit to the initial curve fit, whereas values away from zero indicate that the new data points are a bad fit to the initial curve fit. Here, the processor 104 implements this computation by determining how many of the new data points depart from (e.g., are above or below) the initial curve fit 208-2, and if the number of new data points departing from the initial curve fit is greater than the required minimum number of departing points to declare a trend change 208-3. If this number is not greater than the required minimum number of departing points to declare a trend change, then there is insufficient evidence to declare a trend change 212. If, however, this number is greater than the required minimum number of departing points to declare a trend change, then it is determined that a trend change has occurred 214.

If the processor 104 determines that a trend change has not occurred 212, the set of new data points becomes part of the initial set of data points 216 to enlarge the curve fitting window, and steps 204-208 are repeated. As FIG. 2 also depicts, the processor 104, before making the set of new data points part of the initial set of data points, also determines whether or not the required minimum number of departing points to declare a trend change should be decreased. In order to do so, the processor 104 determines whether an incremental reduction in the required minimum number of departing points to declare a trend change at least maintains the goodness of the initial curve fit to the reduced size new set of data 212-1. If the goodness of fit is at least maintained (e.g., magnitude of the run length ratio < 0.1), then the required minimum number of departing points to declare a trend change is decreased 212-2. If the goodness of fit is not maintained, then no change is implemented. It will be appreciated that the specific amount by which the required minimum number of departing points to declare a trend change is incrementally decreased may vary, and may depend, for example, on whether it is time-based or number-based.

If a determination was made that a trend change has occurred 214, the processor 102 then determines where the trend change was initiated and resets the beginning of the curve fitting window to where the detected trend change was initiated. The processor 104 then computes a new curve fit for the new curve fitting window 214-4, and then repeats steps 206 and 208. As FIG. 2 also depicts, before computing the new curve fit 214-4, the processor 104 may also be configured to determine whether or not the required minimum number of departing points to declare a trend change should be increased. In order to do so, the processor 104 determines whether two successive detected trend changes were initiated within a predetermined measure 214-2. It will be appreciated that this predetermined measure may be a predetermined time or a predetermined number depending, for example, on whether the required minimum number of departing points to declare a trend change is time-based or number-based. No matter its specific unit base, if the two successive detected trend changes were initiated within this predetermined measure, this is an indication that trend changes are being detected too often, and the process 200 may potentially be too sensitive to noisy incoming data. Thus, in response to this determination, the processor 104 voids the latest detected trend change and incrementally increases the required minimum number of departing points to declare a trend change 214-3. As with its reduction, it will be appreciated that the specific amount by which the required minimum number of departing points to declare a trend change is incrementally increased may vary, and may depend, for example, on whether it is time-based or number-based.

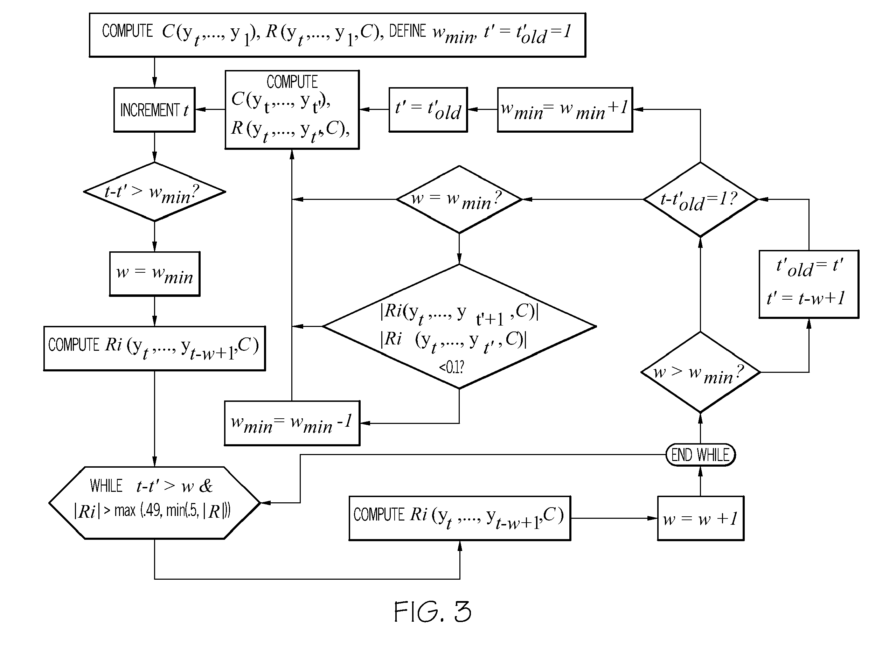

As may be appreciated, the process depicted in FIG. 2 and described above may be specifically implemented using various specific process coding. For completeness, one specific process coding implementation is depicted, in flowchart form, in FIG. 3. The process flow through the depicted flowchart 300 is readily apparent to one of at least ordinary skill in the art, and directly correlates to the generalized process flow depicted in FIG. 2. As such, a detailed description of FIG. 3 need not, and thus will not, be provided. For clarity and completeness, it is noted that in FIG. 3 the following nomenclature is used:
*C* - Curve-fit;
*R* - Run length ratio;
*Ri* - Intermediate calculation of run length ratio;
*w* - Length of the curve-fit window;
*t*'- Data window cut-off point calculated adaptively;
*t'_{old}-* Memory for *t'*;
*yₜ-* data point at time *t*; and
*wₘᵢₙ* - Minimum number of departing points to declare a trend change.

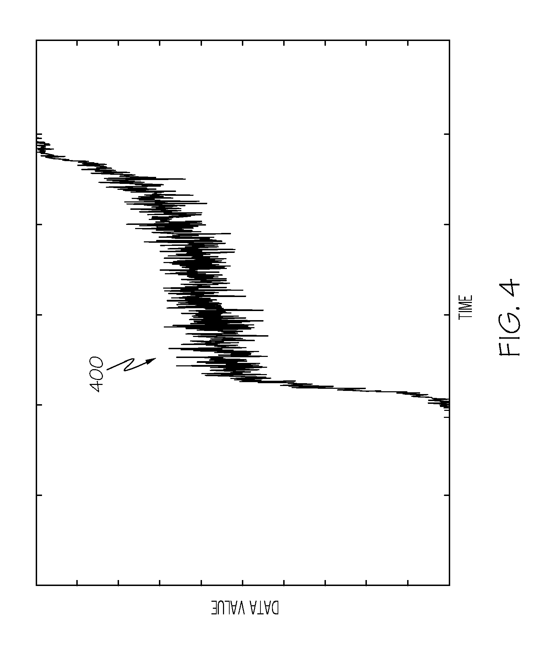

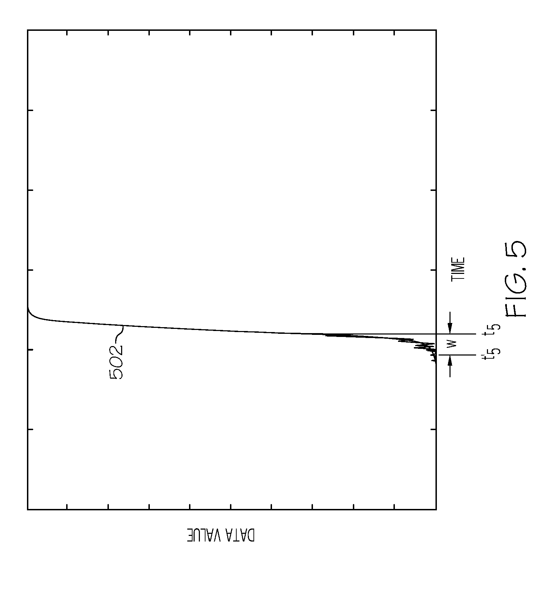

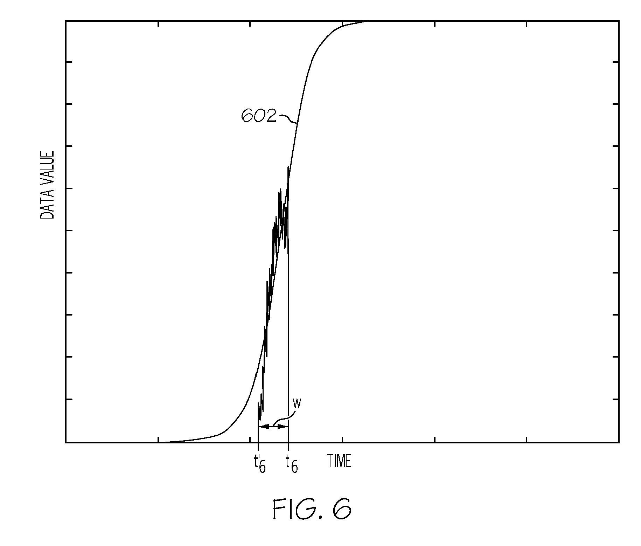

In order to provide and illustrative example of the above-described process 200, reference should now be made to FIGS. 4-9. In particular, FIG. 4 graphically depicts all of the data points 400 that will be retrieved by the processor 104 while implementing the process 200, and FIGS. 5-9 graphically depict sigmoidal function fits of retrieved and processed data points at various instants in time (tₙ) during the process 200. Beginning with FIG. 5, it is seen that the curve fitting window size (w) at time (t₅) has the depicted value of (t₅-t₅'), and the sigmoidal curve fit 502 of these data points is rather steep. As FIG. 6 depicts, as time progressed from (t₅) to (t₆), and more data points were retrieved by the processor 104, at some point in time (either before or at the specifically depicted instant in time (t₆)) a trend change was detected. This is apparent because the curve fit 602, which is less steep than the one depicted in FIG. 5, was computed using data points starting from time (t'₆) and not from (t'₅). Thus, it was determined that the most recent trend change was initiated at (t'₆). It is additionally noted that the curve fitting window size (w) has increased slightly from what it was at (t₅).

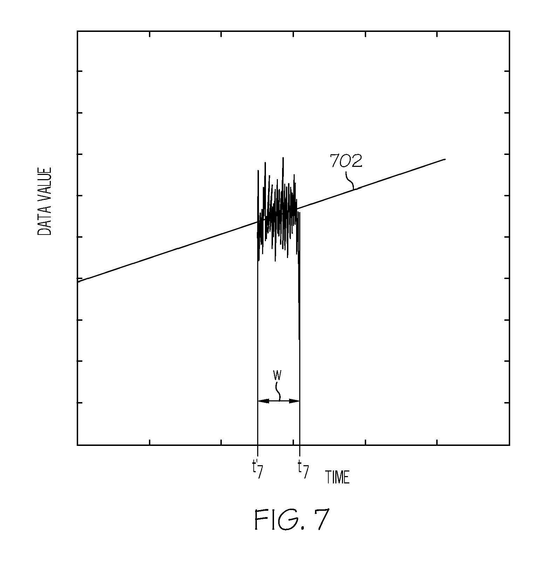

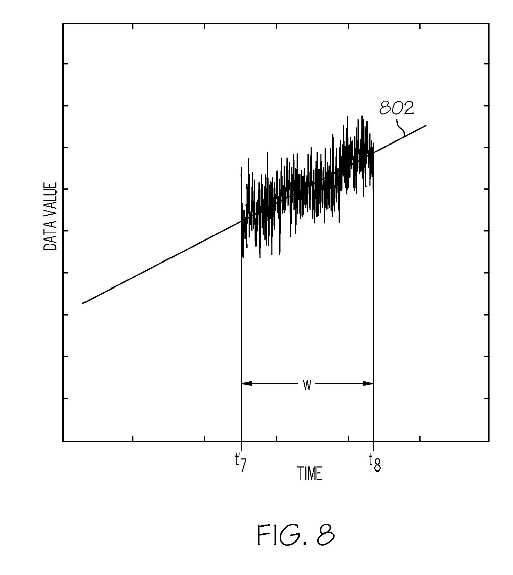

Moving on to FIG. 7, it is again apparent that as time progressed from (t₆) to (t₇), and more data points were retrieved by the processor 104, one or more trend changes were detected. The computed curve fit 702 at this point in time (t₇) was very flat, and almost linear, and was computed using the data points starting at time (t'₇), meaning that this is where the most recent trend change was initiated. It is seen in FIG. 8 that as time progressed on to time (t₈), and more data points were retrieved by the processor 104, either no trend changes were detected or, if any were, the detected trend changes were initiated within the above-described predetermined measure. This is apparent because the curve fit 802 at this point in time (t₈) was computed using the data points starting at time (t'₇), the same point in time as in FIG. 7. It is also readily apparent that the curve fitting window size (w) was increased significantly from what it was at (t₇). The increase in the curve fitting window may be understood because the data between at least (t'₇) and (t₈) appears to be relatively noisy. As was alluded to above, a relatively small required minimum number of departing points to declare a trend change of noisy data could cause an inordinate (and unnecessary) number of trend changes to be determined, and increasing the required minimum number of departing points to declare a trend change will alleviate this potential problem.

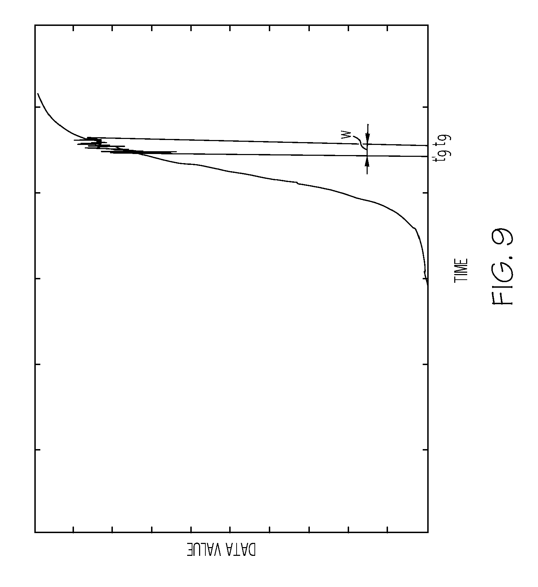

Referring finally to FIG. 9, it is once again apparent that as time progressed from (t₈) to (t₉), and more data points were retrieved by the processor 104, one or more trend changes were detected. The computed curve fit 902 at this point in time (t₇), which is once again a rather steep sigmoidal curve, was computed using the data points starting at time (t'₉), meaning that this is where the most recent trend change was initiated. It is also readily apparent that the curve fitting window size (w) was decreased significantly from what it was at (t₈). As was alluded to above, a relatively large required minimum number of departing points to declare a trend change could result in insensitivity (and unnecessary) to trend change detection. This can be alleviated by decreasing the required minimum number of departing points to declare a trend change.

The process 200 described above may be used with various types of data and for various purposes. One of the purposes for which the process 200 was invented is to allow diagnostics from diagnostic monitors or prognostic predictions supplied from a prognostic monitor to be extrapolated further into the future with no *a priori* knowledge of the system that providing the prognostic predictions. For such an implementation, the data source 102 in FIG. 1 is preferably a prognostic monitor that is configured to supply prognostic predictions N-number of days into the future. The processor 104, implementing the above-described process 200, and based on the sigmoidal function curve fits computed thereby, extrapolates the prognostic predictions to M-number of days into the future or in the past.

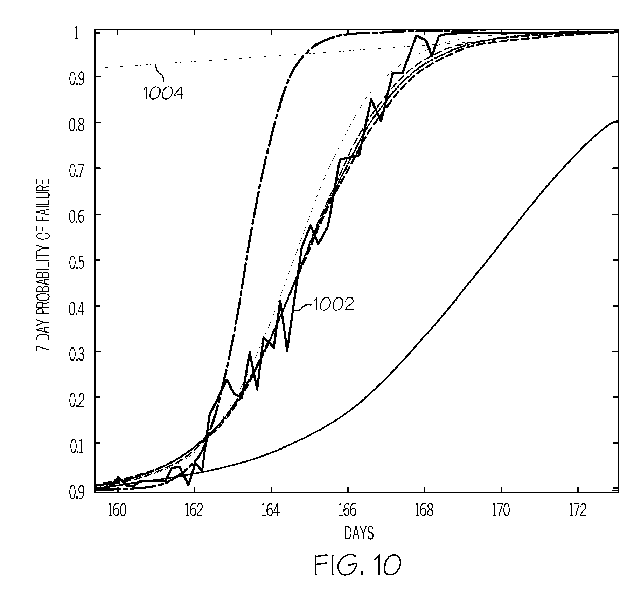

In order to provide a practical illustration of prognostic prediction extrapolation, a prognostic monitor that implements a known stochastic fatigue crack growth model is used as the data source 102. The model, at each prediction instant, is provided with current crack-length data of a specimen from one or more sensors. The critical crack-length, which is the crack-length at which the specimen can be declared failed, is *a priori* known. Using the sensed crack-length data the model determines 7-day (e.g., N=7 in this particular example) failure probability predictions for the specimen. It is these probabilities that are retrieved by the processor 104 for input to the above-described process 200. With reference to FIG. 10, sigmoidal function fits of the available 7-day failure probability prediction data at various instants in times are graphically depicted together with the 7-day failure probability prediction data that are available over the entire depicted period of time. In particular, the curve 1002 depicts all of the 7-day failure probability prediction data that are available over the entire depicted period of time, and the various dashed lines depict least squares sigmoidal curve fits for the data that are available at various instants in time (e.g., at various points along the solid line). The line 1004 shows the ratio of actual crack-length to the critical crack-length for a particular type of specimen. It is noted that the specimen fails when the ratio reaches 1.0. As more and more data are made available, the least square sigmoidal curve fits become more and more accurate for extrapolating the prediction beyond 7 days. It is noted that although FIG. 10 depicts extrapolations for a system 100 in which N=7, the process is not limited to this number. Indeed, N and M may be any one of numerous numbers.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The word "exemplary" is used exclusively herein to mean "serving as an example, instance, or illustration." Any embodiment described herein as "exemplary" is not necessarily to be construed as preferred or advantageous over other embodiments.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system for adaptively detecting trend changes in data, comprising:
a data source configured to supply data points; and
a processor in operable communication with the data source and configured to:
a) collect an initial set of data points from the data source;
b) compute a curve fit for the initial set of data points;
c) collect new data points from the data source;
d) determine if a trend change has occurred by processing at least a portion of the new data points to determine if the new data points differ from the computed curve fit by a predetermined metric;
e) if a trend change has not occurred, the processor is further configured to:
(i) make the new data points part of the initial set of data points, and
(ii) repeat b)-d)
and
f) if a trend change has occurred, the processor is further configured to:
(i) determine where the trend change was initiated,
(ii) compute a curve fit for all data collected from where the trend change was initiated, and
(iii) repeat c) and d).

2. The system of Claim 1, wherein, if a trend change has occurred, the processor is further configured to iv) determine if two successive detected trend changes are initiated within a first predetermined measure and v) if so, void the latest detected trend change and proceed to e).

3. The system of Claim 2, wherein:
the set of new data points has a size that is based on a second predetermined measure; and
the processor is further configured to increase the second predetermined measure if the detected trend changes are voided.

4. The system of Claim 2, wherein the first predetermined measure is a predetermined length of time.

5. The system of Claim 2, wherein the first predetermined measure is a predetermined number of data points.

6. The system of Claim 2, wherein, if a trend change has not occurred, the processor is further configured to:
determine if a reduced number of at least the subset of new data points differs from the computed curve fit by a second predetermined metric; and
if not, decrease the second predetermined measure.

7. The system of Claim 6, wherein the second predetermined measure is a predetermined length of time.

8. The system of Claim 6, wherein the second predetermined measure is a predetermined number of data points.

9. The system of Claim 1, wherein:
the processor is configured to compute a run length of at least a subset of the set of new data points.

10. The system of Claim 1, wherein the processor is further configured to extrapolate the curve fit.

11. The system of Claim 1, wherein the data source is a sensor measuring a physical property.
